# EUROPEAN PATENT SPECIFICATION

(11) **EP 1 533 527 B1**
(45) Date of publication and mention of the grant of the patent: **12.09.2007**
(21) Application number: 04027475.5
(22) Date of filing: 19.11.2004
(51) Int. Cl.: F04C 23/00, F01C 21/10, F04C 29/00

(54) **Assembly method of motor housing and motor stator of sealed type compressor**
Montageverfahren des Motorgehäuses und des Motorstators eines hermetischen Verdichters
Méthode d'assemblage d'un boîtier de moteur et d'un stator de moteur d'un compresseur de type hermétique

(30) Priority: 21.11.2003 JP 2003392357
(43) Date of publication of application: 25.05.2005
(73) Proprietor: KABUSHIKI KAISHA TOYOTA JIDOSHOKKI, Kariya-shi, Aichi-ken (JP)
(72) Inventor: Kimura, Kazuya, Kariya-shi Aichi-ken (JP); Shimizu, Izuru, Kariya-shi Aichi-ken (JP); Kawata, Takeshi, Kariya-shi Aichi-ken (JP)
(74) Representative: HOFFMANN EITLE

(56) References cited:
- EP-A- 1 139 542
- US-A1- 2002 102 175
- PATENT ABSTRACTS OF JAPAN vol. 018, no. 047 (E-1496), 25 January 1994 (1994-01-25) -& JP 05 268740 A (SEIKO EPSON CORP), 15 October 1993 (1993-10-15)
- PATENT ABSTRACTS OF JAPAN vol. 015, no. 378 (M-1161), 24 September 1991 (1991-09-24) -& JP 03 151591 A (SANYO ELECTRIC CO LTD), 27 June 1991 (1991-06-27)
- PATENT ABSTRACTS OF JAPAN vol. 2000, no. 20, 10 July 2001 (2001-07-10) -& JP 2001 078385 A (TOKYO PARTS IND CO LTD), 23 March 2001 (2001-03-23)

## Description

### BACKGROUND OF THE INVENTION

The present invention relates to a method of assembling a sealed type motor-driven compressor.

In a sealed type motor-driven compressor, a sealed housing accommodates, for example, a scroll type compressor mechanism and an electrical motor for driving the mechanism. The motor includes a rotational shaft, a rotor, and a stator. The rotational shaft of the motor is rotationally supported at a middle portion of a motor housing, which forms part of the sealed housing. The rotor is securely fitted to the outer circumferential surface of the rotational shaft. The stator is securely fitted to the inner circumferential surface of the motor housing through shrink fitting. The stator includes a cylindrical stator core and coils arranged along the inner circumference of the stator core. A technique for shrink-fitting the stator to the motor housing is disclosed in, for example, Japanese Laid-Open Patent Publication Nos. 2000-224787 and 2003-269335.

When the motor housing is formed of aluminum, which has smaller modulus of elasticity than iron, a pressure rise in the motor housing causes a relatively great increase of the inner diameter of the motor housing, as compared to the case in which the motor housing is formed of iron. Chlorofluorocarbon or carbon dioxide is used as refrigerant gas charged in a refrigerating circuit of a vehicle air conditioner. The maximum charging pressure of chlorofluorocarbon gas is approximately 1 to 2 MPa, while that of carbon dioxide is equal to or greater than 10 MPa. As long as the pressure in the motor housing is maximally 1 to 2 MPa, the stator is prevented from loosening with respect to the motor housing by a fastening interference defined in shrink fitting of the stator core and the motor housing. However, if carbon dioxide is used as the refrigerant, the pressure equal to or greater than 10 MPa is applied to the motor housing.

Accordingly, if carbon dioxide is used as the refrigerant and the motor housing formed of aluminum is employed, the motor housing must have a relatively large wall thickness for preventing the increase of the inner diameter of the motor housing. However, this increases the dimensions and weight of the compressor. Alternatively, the shrink fitting of the stator core and the motor housing may be performed with a sufficiently large fastening interference such that an effective fastening interference is maintained even if the inner circumference of the motor housing is increased. However, to provide a sufficiently large fastening interference, the shrink fitting must be performed at a relatively high temperature, leading to lowering of the strength of the motor housing, which is formed of aluminum. It is thus extremely difficult to increase the fastening interference for the shrink fitting.

In contrast, if the motor housing is formed of iron, the increase of the inner diameter of the motor housing, which is caused by the high pressure applied by the refrigerant gas, is extremely small. However, the motor housing formed of iron increases the weight of the compressor.

Japanese Patent Publication JP 05 268740 discloses a combination of features falling within the scope of the precharacterising portion of Claim 1.

### SUMMARY OF THE INVENTION

To achieve the stated objectives and to realise the stated advantages of the present invention, there is provided a method of assembling a sealed type motor-driven compressor having a cylindrical motor housing and an annular stator core fastened to the interior of the motor housing, the method being characterized by: mechanically deforming the motor housing in an elastic manner for permitting the stator core to be inserted into the motor housing; and restoring the deformed motor housing to the original shape by an elastic shape-restoring force with the stator core inserted into the motor housing, such that the motor housing fastens the stator core.

### BRIEF DESCRIPTION OF THE DRAWINGS

To enable a better understanding of the present invention, and to show how the same may be carried into effect, reference will now be made, by way of example only, to the accompanying drawings, in which:-
Fig. 1 is a longitudinal cross-sectional view showing an embodiment of a motor-driven compressor;
Fig. 2 is a partially omitted cross-sectional view showing a motor portion of the compressor of Fig. 1;
Fig. 3 is a cross-sectional view showing a fastening interference between a motor housing and a stator core before assembly;
Fig. 4 is a cross-sectional view showing an elastically deformed state of the motor housing such that the stator core is fitted to the motor housing;
Fig. 5 is a partially omitted cross-sectional view showing a motor portion of a modification of the embodiment of Fig. 4; and
Figs. 6(a) to 6(c) are cross-sectional views showing an application step-by-step of an assembly method within the scope of the present invention.

### DETAILED DESCRIPTION

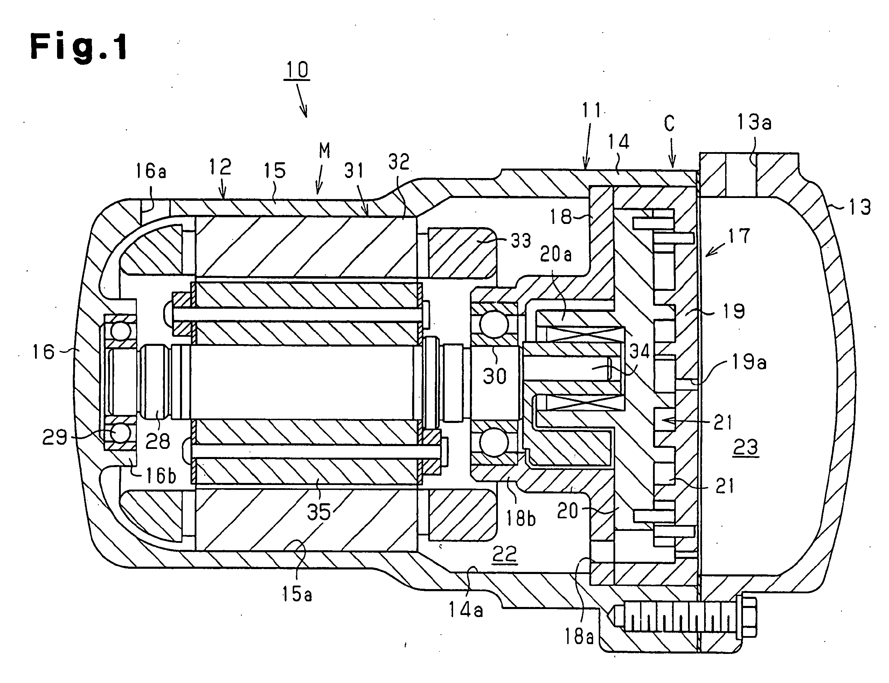

With reference to Figs. 1 to 4, an embodiment of an assembly method of a stator core and a motor housing of a sealed type motor-driven compressor 10 according to the present invention will be described.

The compressor 10 includes a sealed housing 11 having a housing body 12 and a front housing 13. The housing body 12 is formed of aluminum through forging and has a lidded, horizontal cylindrical shape. The front housing 13 is securely connected to a front opening end (as viewed to the right in Fig. 1) of the housing body 12. The housing body 12 includes a compressor housing 14, a motor housing 15, and a rear housing 16 (as viewed to the left in Fig. 1). The compressor housing 14 is located in a front portion of the housing body 12. The motor housing 15 has a relatively small diameter and is formed integrally with a rear end of the compressor housing 14. The rear housing 16 is formed integrally with a rear end of the motor housing 15.

The compressor housing 14 accommodates a scroll type compressor mechanism 17. The mechanism 17 includes a base plate 18, a fixed scroll 19, and a revolving scroll 20. The base plate 18 is securely fitted to a stepped portion of an inner circumferential surface 14a of the compressor housing 14. The fixed scroll 19 is securely fitted to the inner circumferential surface of a front opening of the compressor housing 14. The revolving scroll 20 is arranged between the base plate 18 and the fixed scroll 19. A compression chamber 21) is defined by the fixed scroll 19 and the revolving scroll 20. Further, a suction chamber 22 is defined in the compressor housing 14 and at a rear side of the base plate 18.

A discharge chamber 23 is defined in the front housing 13. Refrigerant gas is drawn from the suction chamber 22 to the compression chamber 21 through a suction port 18a, which is defined in the base plate 18, and is compressed in the compression chamber 21. The refrigerant gas is then discharged to the discharge chamber 23 through a discharge port 19a, which is defined in the fixed scroll 19. The refrigerant gas is, for example, carbon dioxide.

An outlet 13a is defined in the front housing 13 for supplying the compressed refrigerant gas to an external refrigerating circuit. An inlet 16a is defined in the rear housing 16 for introducing the refrigerant gas from the external refrigerating circuit to the suction chamber 22.

A stator 31 is securely fitted to the inner circumferential surface of the motor housing 15, which forms part of an electrical motor M. The stator 31 includes a stator core 32, teeth 32a, and coils 33. The stator core 32 is formed of iron. The teeth 32a are formed on the inner circumference of the stator core 32 and the coils 33 are each wound around the corresponding one of the teeth 32a. A boss portion 16b is formed integrally with an inner rear side of the rear housing 16. Likewise, a boss portion 18b is formed integrally with the rear side of the base plate 18.

A rotary shaft 28 is rotationally supported by a pair of bearings 29, 30 between the boss portions 16b, 18b. An eccentric pin 34 is disposed at a distal end of the rotary shaft 28 and is connected to a boss portion 20a, which is formed integrally with a rear side of the revolving scroll 20, through a bearing. A rotor 35 is securely fitted to the outer circumferential surface of the rotary shaft 28.

When an alternating current is supplied from a non-illustrated power supply to the coils 33, electromagnetic attractive force is produced by the stator 31 and the rotor 35, such that the rotary shaft 28 is rotated. This revolves the eccentric pin 34, thus permitting the revolving scroll 20 to revolve in a state prohibited from rotating. In this manner, the compressor mechanism 17 compresses the refrigerant gas.

The main portion of the present invention will hereafter be described.

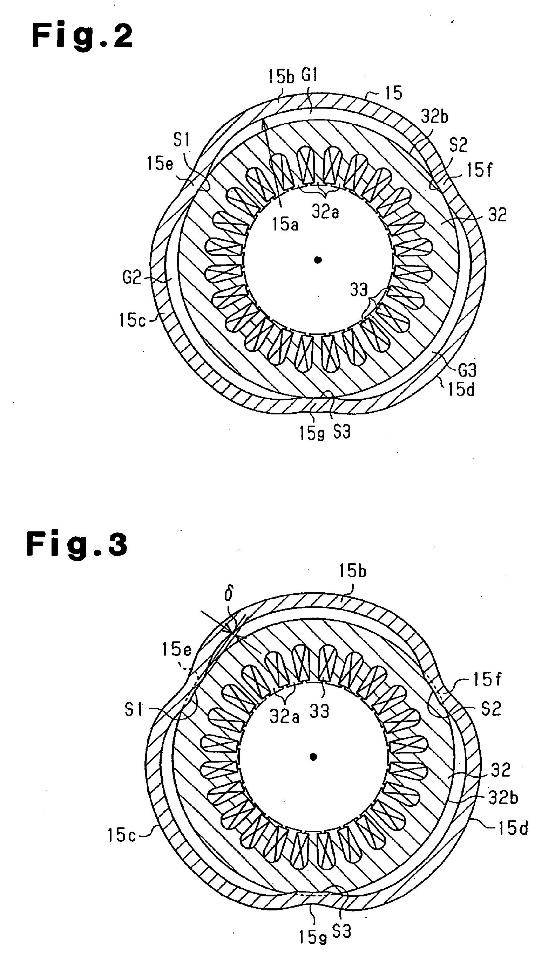

Fig. 2 is a lateral cross-sectional view showing the motor housing 15 and the stator core 32. In the illustrated embodiment, the motor housing 15 includes first, second, and third expanded portions 15b, 15c, 15d and first, second, and third fastening interference portions 15e, 15f, 15g. Each of the fastening interference portions 15e to 15g is formed integrally with the motor housing 15 and is arranged between the corresponding adjacent ones of the first to third expanded portions 15b to 15d. First, second, and third fastening surfaces S1, S2, S3 are each formed along the arched inner circumferential surface of the corresponding one of the first to third fastening interference portions 15e to 15g. The first to third fastening surfaces S1 to S3 are fastened to an outer circumferential surface 32b of the stator core 32 at three respective positions by a predetermined fastening force.

The stator core 32 is assembled with the motor housing 15 by the following method.

Fig. 3 shows the state of the motor housing 15 and the stator core 32 before assembly. In this state, as viewed with respect to the axis of the stator core 32, the first to third fastening surfaces S1 to S3 of the first to third fastening interference portions 15e to 15g are located radially inward compared to the outer circumferential surface 32b of the stator core 32. The distance between the outer circumferential surface 32b of the stator core 32 and each of the fastening surfaces S1 to S3, as viewed with respect to the axis of the stator core 32, is defined as a fastening interference δ. In the illustrated embodiment, the fastening interference δ is set to, for example, 200 µm. The fastening interference of the motor housing 15 as a whole is set to 2 x δ = 400 µm.

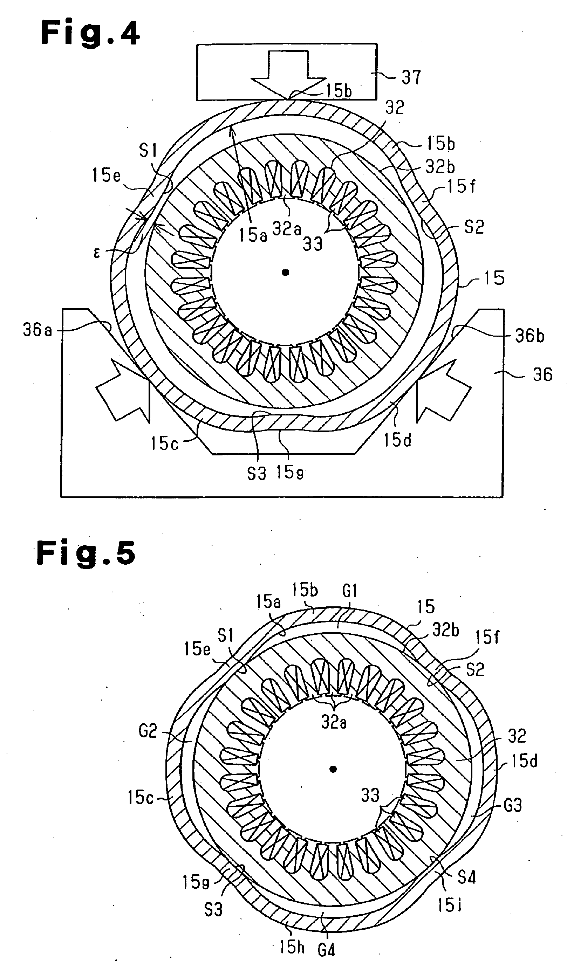

With reference to Fig. 4, the second and third expanded portions 15c, 15d are received by a lower pressing tool 36 having a pair of slanted support surfaces 36a, 36b at opposing sides. In this state, an upper pressing tool 37 presses the outer circumferential surface of the first expanded portion 15b downward, that is, radially inward. The lower and upper pressing tools 36 and 37 elastically deform the first to third expanded portions 15b to 15d such that the first to third fastening interference portions 15e to 15g are displaced radially outward.

Accordingly, referring to Fig. 4, the fastening surfaces S1 to S3 are spaced from the positions corresponding to the outer circumferential surface 32b of the stator core 32. Each of the resulting distances between the fastening surfaces S1 to S3 and the positions corresponding to the outer circumferential surface 32b of the stator core 32 is defined as fitting interference ε. Although it is theoretically possible to set the fitting interference ε to 0 µm, the fitting interference ε must be set to approximately 50 µm, in order to absorb manufacturing errors of the motor housing 15 and the stator core 32 and facilitate the assembly.

As illustrated in Fig. 4, the stator core 32 is then inserted into the motor housing 15 with the fitting interference ε maintained. In this state, pressing by the pressing tools 36, 37 is released, each of the first to third fastening interference portions 15e to 15g is restored to the original state by elastic shape-restoring force. Each fastening surface S1 to S3 is restored in accordance with the distance corresponding to the fitting interference ε because of the fastening interference δ. Each fastening surface S1 to S3 is thus securely fastened to the outer circumferential surface 32b of the stator core 32. In this manner, without using the shrink fitting, the stator core 32 is securely fastened to the motor housing 15.

A forming angle defined by the fastening surface S1 to S3 of each fastening interference portion 15e to 15g with respect to the center of the motor housing 15 in the circumferential direction is set to, for example, 5 to 30 degrees. If this forming angle is excessively small, the fastening interference portions 15e to 15g may be deformed. If the forming angle is excessively large, the predetermined fastening interference δ is hard to ensure. It is thus preferred that the forming angle is set to 10 to 20 degrees.

Referring to Fig. 2, in the state that the motor housing 15 is assembled with the stator core 32, clearances G1, G2, G3 are each defined between the inner circumferential surface of the corresponding one of the first to third expanded portions 15b to 15d and the outer circumferential surface 32b of the stator core 32. Each of the clearances G1 to G3 defines a passage for guiding the refrigerant gas drawn to the motor housing 15 through the inlet 16a to the suction chamber 22.

The refrigerant gas, which is carbon dioxide, sealed in the refrigerating circuit is introduced into the compressor 10. Thus, when the compressor 10 actually operates, a relatively high pressure exceeding 10MPa is applied to the compressor 10. However, in the illustrated embodiment, the fastening interference 2δ of 400 µm is provided. Thus, even if the high pressure acting on the inner circumferential surface 15a of the motor housing 15 increases the inner diameter of the motor housing 15 such that the motor housing 15 loosens with respect to the stator core 32 by, for example, 147 µm, a sufficiently great fastening force is maintained between the stator core 32 and the motor housing 15.

The illustrated embodiment has the following advantages.
(1) In the illustrated embodiment, the first to third expanded portions 15b to 15d of the motor housing 15 are pressed radially inward from the outer side by using the pressing tools 36, 37. The fastening surfaces S1 to S3 of the first to third fastening interference portions 15e to 15g are thus displaced radially outward in accordance with the fastening interference δ and the fitting interference ε. As a result, each fastening surface S1 to S3 is slightly spaced from the position corresponding to the outer circumferential surface 32b of the stator core 32.
   In this state, the stator core 32 is inserted into the motor housing 15 and the pressing tools 36, 37 are released. This allows the first to third fastening interference portions 15e to 15g to be pressed against the outer circumferential surface 32b of the stator core 32. It is thus possible to easily ensure the fastening interference δ larger than that of the shrink fitting or shrink cooling. Accordingly, without employing a complicated technique with the shrink fitting and the shrink cooling, the stator core 32 is securely fastened to the motor housing 15.
(2) In the illustrated embodiment, since carbon dioxide is used as refrigerant gas, a relatively high pressure is applied to the compressor 10, as compared to the case in which chlorofluorocarbon is employed. Further, the motor housing 15, to which the stator core 32 is fastened, can be formed of aluminum by forging at a relatively small wall thickness, for example, 4mm. This reduces the weight of the compressor 10, as compared to the case in which the motor housing 15 is formed through casting and has a relatively large wall thickness.

The present invention may be embodied in the following modified forms.

The modification of Fig. 5 is different from the illustrated embodiment in the number of the expanded portions and that of the fastening interference portions. In Fig. 5, first to fourth expanded portions 15b, 15c, 15d, 15h are formed in the motor housing 15. Further, first to fourth fastening interference portions 15e, 15f, 15g, 15i are disposed between the corresponding adjacent ones of the expanded portions 15b, 15c, 15d, 15h. First to fourth fastening surfaces S1 to S4 are formed respectively in the first to fourth fastening interference portions 15e, 15f, 15c, 15i.

Thus, the outer circumferential surface 32b of the stator core 32 is fastened to the motor housing 15 at four positions corresponding to the first to fourth fastening surfaces S1 to S4. In this modification, before assembling the motor housing 15 with the stator core 32, the motor housing 15 is pressed from four directions corresponding to the expanded portions 15b, 15c, 15d, 15h at opposing vertical positions and opposing horizontal positions.

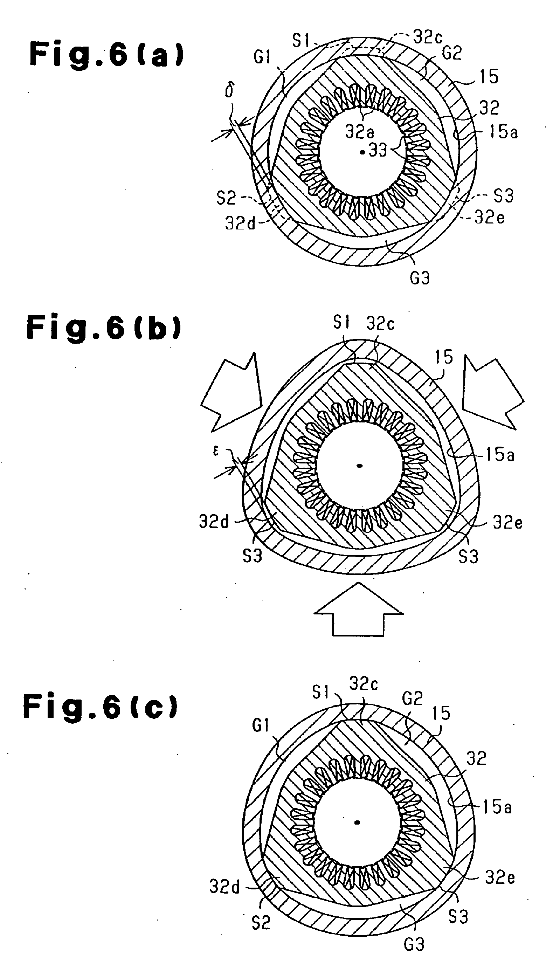

In the modification of Figs. 6 (a) to 6(c), the motor housing 15 has a cylindrical shape and the stator core 32 has a substantially triangle cross-sectional shape. First to third fastening interference portions 32c, 32d, 32e are each formed at an outer circumferential portion of the stator core 32. Referring to Fig. 6(b), the outer circumferential surface of the motor housing 15 is pressed at three positions, radially inward from the outer side. This expands the portions of the motor housing 15 corresponding to the first to third fastening interference portions 32c to 32e in radial outward directions.

As a result, a fitting interference ε is defined between each of the first to third fastening surfaces S1 to S3 of the first to third fastening interference portions 32c to 32e and the inner circumferential surface 15a of the motor housing 15. In this state, the stator core 32 is inserted into the motor housing 15 and the motor housing 15 is released from the pressed state of Fig. 6(b). Accordingly, with reference to Fig. 6(c), the motor housing 15 is deformed to restore the original cylindrical shape such that the motor housing 15 is pressed against the first to third fastening surfaces S1 to S3 of the first to third fastening interference portions 32c to 32e of the stator core 32. In this manner, the stator core 32 is fastened to the motor housing 15 in accordance with a predetermined fastening interference δ.

Each of the modifications of Figs. 5 and 6 has the same advantages as those of the illustrated embodiment.

The present invention may be further modified as follows.

As long as a resulting fastening interference exceeds that of shrink fitting or shrink cooling, the motor housing 15 and the stator core 32 may be fastened together by different methods. The methods include, for example, mechanical deformation of either the motor housing 15 or the stator core 32 or both of the motor housing 15 and the stator core 32.

The motor housing 15 may be deformed by a different method other than pressing. For example, a plurality of tension tools may be employed at a plurality of positions of the outer circumferential surface of the motor housing 15. The tools thus apply tensile force to the motor housing 15, thus deforming the motor housing 15.

Further, for deforming the stator core 32, pressing or tension tools may be employed at a plurality of positions of the inner circumferential surface of the stator core 32. The tools thus apply pressing or tensile force to the stator core 32, thus deforming the stator core 32.

The method employed in the illustrated embodiment, the mechanical elastic deformation of the motor housing or the stator core 32 may be combined with the shrink fitting or shrink cooling.

Other different methods may be employed, the circumferential dimension of the inner circumferential surface 15a of the motor housing 15 may be larger than that of the outer circumferential surface 32b of the stator core 32 and the stator core 32 may be fastened to the motor housing 15 through deformation of the motor housing 15.

The motor housing 15 may be formed of a metal material other than aluminum that has a thermal expansion coefficient different than that of the iron material forming the stator core 32.

An increased number of expanded portions may be formed in the motor housing 15. However, for ensuring a predetermined fastening interference, it is preferred to deploy three to five expanded portions in the motor housing 15.

An increased number of fastening interference portions 32c to 32e may be formed in the stator core 32. However, for ensuring a predetermined fastening interference, it is preferred to deploy three to five fastening interference portions in the stator core 32.

Further, the motor housing 15 may be formed with an oval or triangle or square cross-sectional shape.

It is one advantage of the present invention to provide a novel assembly method of a motor housing and a stator core capable of providing a sufficiently large fastening interference between the motor housing and the stator core for suppressing loosening of the stator core with respect to the motor housing, which is otherwise caused by a relatively high pressure produced by refrigerant gas.

The above-described examples and embodiments are to be considered as illustrative and not restrictive and the invention is not to be limited to the details given herein, but may be modified within the scope defined by the appended claims.

## Claims

1. A method of assembling a sealed type motor-driven compressor (10) having a cylindrical motor housing(15) and an annular stator core (32) fastened to the interior of the motor housing, the method being **characterized by**:
mechanically deforming the motor housing in an elastic manner for permitting the stator core to be inserted into the motor housing; and
restoring the deformed motor housing to the original shape by an elastic shape-restoring force with the stator core inserted into the motor housing, such that the motor housing fastens the stator core.

2. The method according to claim 1, **characterized by**:
setting an inner circumferential shape of the motor housing (15) and an outer circumferential shape of the stator core (32) such that a predetermined fastening interference (δ) is defined between the motor housing and the stator core when the motor housing is separated from the stator core;
elastically deforming the motor housing by applying an external force to the motor housing for eliminating the fastening interference;
inserting the stator core into the motor housing with the motor housing held in the elastically deformed state; and
releasing the external force from the motor housing with the stator core inserted into the motor housing for elastically restoring the motor housing to the original state such that the motor housing fastens the stator core.

3. The method according to claim 2 **characterized in that**:
the motor housing (15) and the stator core (32) are formed such that the motor housing (15) has expanded portions (15b, 15c, 15d; 15h) extending radially outward and fastening interference portions (15e, 15f, 15g; 15i) extending radially inward compared to the outer circumferential surface of the stator core and that the circumferential dimension of the inner circumferential surface of the motor housing at the expanded portions is larger than the circumferential dimension of the outer circumferential surface of the stator core, the expanded portions of the motor housing being deformed so that the interference portions are displaced radially outward of the outer circumferential surface of the stator core for permitting the stator core to be inserted into the motor housing.

4. The method according to claim 2 or 3, **characterized in that** the fastening interference (δ) is larger than a fastening interference that can be defined in shrink fitting or shrink cooling of the stator core (32) and the motor housing (15).

5. The method according to any one of claims 2 to 4, **characterized by**:
providing a plurality of fastening interference portions (15e, 15f, 15g, 15i, 32c, 32d, 32e) along the circumferential direction of at least one of the motor housing (15) and the stator core (32), the predetermined fastening interference (δ) being defined at a portion between the motor housing and the stator core corresponding to each of the fastening interference portions when the motor housing is separated from the stator core;
elastically deforming the motor housing by applying pressing force as the external force to a plurality of portions of the outer circumferential surface of the motor housing in radial inward directions, such that the portions of the motor housing corresponding to the fastening interference portions are displaced in radial outward directions of the motor housing;
releasing the force from the motor housing with the stator core inserted into the motor housing such that the portions of the motor housing corresponding to the fastening interference portions fasten the stator core.

6. The method according to claim 5, **characterized in that** the fastening interference portions (15e, 15f, 15g; 15i) are formed in the motor housing (15), the motor housing including a plurality of expanded portions (15b, 15c, 15d; 15h) expanded radially outward, each of the expanded portions being arranged between the corresponding adjacent ones of the fastening interference portions in the circumferential direction of the motor housing, and wherein, when the expanded portions are pressed in radial inward directions of the motor housing by a pressing tool (36, 37), the motor housing is elastically deformed such that the fastening interference portions are displaced radially outward.

7. The method according to claim 6, **characterized in that** the expanded portions (15e, 15f, 15g; 15i) are disposed at three to five positions along the circumferential direction of the motor housing.

8. The method according to claim 5, **characterized in that** the fastening interference portions (32c, 32d, 32e) are formed in the stator core (32), and wherein, when the portions of the motor housing (15) non-corresponding to the fastening interference portions are pressed radially inward by a pressing tool (36, 37), the motor housing is elastically deformed such that the portions of the motor housing corresponding to the fastening interference portions are displaced radially outward.

9. The method according to claim 8, **characterized in that** the fastening interference portions (32c, 32d, 32e) are provided at three to five positions along the circumferential direction of the stator core (32).

10. The method according to any one of claims 1 to 9, **characterized in that** the stator core is formed of iron type material, and wherein the motor housing is formed of a metal having a thermal expansion coefficient different from that of iron type material.

11. The method according to claim 10, **characterized in that** the motor housing is formed by forging aluminum.

## Patentansprüche

1. Verfahren zur Montage eines Motor-angetriebenen hermetischen Verdichters (10) mit einem zylindrischen Motorgehäuse (15) und einem ringförmigen Statorkern (32), der am Inneren des Motorgehäuses befestigt ist, wobei das Verfahren **gekennzeichnet ist, durch**:
mechanisches Verformen des Motorgehäuses auf eine elastische Art, um zuzulassen, dass der Statorkern in das Motorgehäuse eingeführt wird; und
Zurückführen des verformten Motorgehäuses in die Originalform **durch** eine elastische Form-Rückstellkraft mit dem Statorkern in das Motorgehäuse eingeführt, derart, dass das Motorgehäuse den Statorkern befestigt.

2. Verfahren nach Anspruch 1, **gekennzeichnet durch**:
Festlegen einer inneren Umfangsform des Motorgehäuses (15) und einer äußeren Umfangsform des Statorkerns (32), derart, dass ein vorbestimmtes Befestigungsübermaß (δ) zwischen dem Motorgehäuse und dem Statorkern definiert ist, wenn das Motorgehäuse von dem Statorkern getrennt ist;
elastisches Verformen des Motorgehäuses **durch** Aufbringen einer äußeren Kraft auf das Motorgehäuse, zum Beseitigen des Befestigungsübermaßes;
Einführen des Statorkerns in das Motorgehäuse, mit dem Motorgehäuse in dem elastisch verformten Zustand gehalten; und
Lösen der äußeren Kraft von dem Motorgehäuse mit dem Statorkern in das Motorgehäuse eingeführt, zum elastischen Zurückführen des Motorgehäuses in den Originalzustand, derart, dass das Motorgehäuse den Statorkern befestigt.

3. Verfahren nach Anspruch 2, **dadurch gekennzeichnet, dass**:
das Motorgehäuse (15) und der Statorkern (32) derart ausgebildet sind, dass das Motorgehäuse (15) erweiterte Abschnitte (15b, 15c, 15d; 15h), die sich radial nach außen erstrecken, und Befestigungsübermaßabschnitte (15e, 15f, 15g; 15i) aufweist, die sich radial nach innen erstrecken, verglichen mit der äußeren Umfangsoberfläche des Statorkerns, und dass die Umfangsabmessung der inneren Umfangsoberfläche des Motorgehäuses an den erweiterten Abschnitten größer ist als die Umfangsabmessung der äußeren Umfangsoberfläche des Statorkerns, wobei die erweiterten Abschnitte des Motorgehäuses so verformt werden, dass die Übermaßabschnitte radial nach außen von der äußeren Umfangsoberfläche des Statorkerns verschoben werden, um zuzulassen, dass der Statorkern in das Motorgehäuse eingeführt wird.

4. Verfahren nach Anspruch 2 oder 3, **dadurch gekennzeichnet, dass** das Befestigungsübermaß (δ) größer ist als ein Befestigungsübermaß, dass beim Schrumpfpassen oder Schrumpfkühlen des Statorkerns (32) und des Motorgehäuses (15) definiert werden kann.

5. Verfahren nach einem der Ansprüche 2 bis 4, **gekennzeichnet durch**:
Vorsehen einer Vielzahl von Befestigungsübermaßabschnitten (15e, 15f, 15g, 15i, 32c, 32d, 32e) entlang der Umfangsrichtung von zumindest einem des Motorgehäuses (15) und des Statorkerns (32), wobei das vorbestimmte Befestigungsübermaß (δ) an einem Abschnitt zwischen dem Motorgehäuse und dem Statorkern definiert wird, der jedem der Befestigungsübermaßabschnitte entspricht, wenn das Motorgehäuse von dem Statorkern getrennt ist;
elastisches Verformen des Motorgehäuses **durch** Aufbringen einer Druckkraft als die äußere Kraft auf eine Vielzahl von Abschnitten von der äußeren Umfangsoberfläche des Motorgehäuses in radial nach innen gehende Richtungen, derart, dass die Abschnitte des Motorgehäuses, die den Befestigungsübermaßabschnitten entsprechen, in radial nach außen gehende Richtungen des Motorgehäuses verschoben werden;
Lösen der Kraft von dem Motorgehäuse mit dem Statorkern in das Motorgehäuse eingeführt, derart, dass die Abschnitte des Motorgehäuses, die den Befestigungsübermaßabschnitten entsprechen, den Statorkern befestigen.

6. Verfahren nach Anspruch 5, **dadurch gekennzeichnet, dass** die Befestigungsübermaßabschnitte (15e, 15f, 15g; 15i) in dem Motorgehäuse (15) ausgebildet sind, wobei das Motorgehäuse eine Vielzahl von erweiterten Abschnitten (15b, 15c, 15d; 15h) umfasst, die radial nach außen erweitert sind, wobei jeder der erweiterten Abschnitte zwischen den entsprechenden angrenzenden der Befestigungsübermaßabschnitte in der Umfangsrichtung des Motorgehäuses angeordnet ist, und wobei, wenn die erweiterten Abschnitte in radial nach innen gehende Richtungen des Motorgehäuses durch ein Presswerkzeug (36, 37) gedrückt werden, das Motorgehäuse elastisch verformt wird, derart, dass die Befestigungsübermaßabschnitte radial nach außen verschoben werden.

7. Verfahren nach Anspruch 6, **dadurch gekennzeichnet, dass** die erweiterten Abschnitte (15e, 15f, 15g; 15i) an drei bis fünf Positionen entlang der Umfangsrichtung des Motorgehäuses angeordnet sind.

8. Verfahren nach Anspruch 5, **dadurch gekennzeichnet, dass** die Befestigungsübermaßabschnitte (32c, 32d, 32e) in dem Statorkern (32) ausgebildet sind, und wobei, wenn die Abschnitte des Motorgehäuses (15), die nicht den Befestigungsübermaßabschnitten entsprechen, durch ein Presswerkzeug (36, 37) radial nach innen gedrückt werden, das Motorgehäuse elastisch verformt wird, derart, dass die Abschnitte des Motorgehäuses, die den Befestigungsübermaßabschnitten entsprechen, radial nach außen verschoben werden.

9. Verfahren nach Anspruch 8, **dadurch gekennzeichnet, dass** die Befestigungsübermaßabschnitte (32c, 32d, 32e) an drei bis fünf Positionen entlang der Umfangsrichtung des Statorkerns (32) vorgesehen sind

10. Verfahren nach einem der Ansprüche 1 bis 9, **dadurch gekennzeichnet, dass** der Statorkern aus Material des Eisentyps ausgebildet ist, und wobei das Motorgehäuse aus einem Metall ausgebildet ist, das einen Wärmeausdehnungskoeffizienten aufweist, der sich von demjenigen des Materials des Eisentyps unterscheidet.

11. Verfahren nach Anspruch 10, **dadurch gekennzeichnet, dass** das Motorgehäuse durch Schmieden von Aluminium ausgebildet wird.

## Revendications

1. Procédé d'assemblage d'un compresseur (10) à moteur électrique du type hermétique entraîné par un moteur ayant un boîtier de moteur cylindrique (15) et un noyau de stator annulaire (32) fixé à l'intérieur du boîtier de moteur, le procédé étant **caractérisé par** :
une déformation mécanique du boîtier de moteur, d'une manière élastique, afin de permettre au noyau de stator de s'insérer dans le boîtier de moteur ; et
une restauration du boîtier de moteur déformé dans la forme originale, grâce à une force de restauration de forme élastique, le noyau de stator étant inséré dans le boîtier de moteur, de telle sorte que le boîtier de moteur fixe le noyau du stator.

2. Procédé selon la revendication 1, **caractérisé par** :
la définition d'une forme de circonférence interne du boîtier de moteur (15) et une forme de circonférence externe du noyau de stator (32), de telle sorte qu'une interférence d'attache prédéterminée (δ) soit définie entre le boîtier de moteur et le noyau de stator, lorsque le boîtier de moteur est séparé du noyau de stator ;
la déformation élastique du boîtier de moteur en appliquant une force extérieure au boîtier de moteur, afin d'éliminer l'interférence d'attache ;
l'insertion du noyau de stator dans le boîtier de moteur, le boîtier de moteur étant maintenu dans un état déformé sur le plan élastique ; et
la libération de la force extérieure provenant du boîtier de moteur, le noyau de stator étant inséré dans le boîtier de moteur, afin de restaurer de manière élastique le boîtier de moteur dans l'état original, de telle sorte que le boîtier de moteur attache le noyau de stator.

3. Procédé selon la revendication 2 **caractérisé en ce que** :
le boîtier de moteur (15) et le noyau de stator (32) sont formés de telle sorte que le boîtier de moteur (15) présente des portions dilatées (15b, 15c, 15d ; 15h) qui s'étendent radialement vers l'extérieur et des portions d'interférence d'attache (15e, 15f, 15g ; 15i) qui s'étendent radialement vers l'intérieur, par rapport à la surface de circonférence externe du noyau de stator et **en ce que** la dimension de circonférence de la surface de circonférence interne du boîtier de moteur, au niveau des portions dilatées, est plus grande que la dimension de circonférence de la surface de circonférence externe du noyau de stator, les portions dilatées du boîtier de moteur étant déformées, de telle sorte que les portions d'interférence sont décalées radialement vers l'extérieur de la surface de circonférence externe du noyau de stator, afin de permettre que le noyau de stator soit inséré dans le boîtier de moteur.

4. Procédé selon la revendication 2 ou 3, **caractérisé en ce que** l'interférence d'attache (δ) est supérieure à une interférence d'attache qui peut être définie dans un alésage par contraction ou le refroidissement par contraction du noyau de stator (32) et du boîtier de moteur (15).

5. Procédé selon l'une quelconque des revendications 2 à 4, **caractérisé par** :
la fourniture d'une pluralité de portions d'interférence d'attache (15e, 15f, 15g, 15i, 32c, 32d, 32e) dans la direction de la circonférence d'au moins l'un du boîtier de moteur (15) et du noyau de stator (32), l'interférence d'attache prédéterminée (δ) étant définie au niveau d'une portion située entre le boîtier de moteur et le noyau de stator qui correspond à chacune des portions d'interférence d'attache, lorsque le boîtier de moteur est séparé du noyau de stator ;
la déformation sur le plan élastique du boîtier de moteur en appliquant une force de pression comme force externe sur une pluralité de portions de la surface de circonférence externe du boîtier de moteur, dans des directions radiales dirigées vers l'intérieur, de telle sorte que les portions du boîtier de moteur correspondant aux portions d'interférence d'attache sont déplacées dans la direction radiale vers l'extérieur du boîtier de moteur ;
la libération de la force du boîtier de moteur, le noyau du stator étant inséré dans le boîtier du moteur, de telle sorte que les portions du boîtier de moteur correspondant aux portions d'interférence fixent le noyau de stator.

6. Procédé selon la revendication 5, **caractérisé en ce que** les portions d'interférence d'attache (15e, 15f, 15g ; 15i) sont formées dans le boîtier de moteur (15), le boîtier de moteur incluant une pluralité de portions dilatées (15b, 15c, 15d ; 15h) dilatées radialement vers l'extérieur, chacune des portions dilatées étant agencée entre les portions adjacentes correspondantes des portions d'interférence d'attache dans la direction de la circonférence du boîtier de moteur, et dans lequel, lorsque les portions dilatées sont pressées dans des directions radiales dirigées vers l'intérieur du boîtier de moteur par un outil de pression (36, 37), le boîtier de moteur est déformé sur le plan élastique, de telle sorte que les portions d'interférence d'attache sont déplacées radialement vers l'extérieur.

7. Procédé selon la revendication 6, **caractérisé en ce que** les portions dilatées (15e, 15f, 15g ; 15i) sont disposées en trois à cinq positions le long de la direction de la circonférence du boîtier de moteur.

8. Procédé selon la revendication 5, **caractérisé en ce que** les portions d'interférence d'attache (32c, 32d, 32e) sont formées dans le noyau de stator (32), et dans lequel, lorsque les portions du boîtier de moteur (15) qui ne correspondent pas aux portions d'interférence d'attache sont pressées radialement vers l'intérieur, grâce à un outil de pression (36, 37), le boîtier de moteur est déformé de manière élastique, de telle sorte que les portions du boîtier de moteur correspondant aux portions d'interférence d'attache sont déplacées radialement vers l'extérieur.

9. Procédé selon la revendication 8, **caractérisé en ce que** les portions d'interférence d'attache (32c, 32d, 32e) sont fournies en trois à cinq positions le long de la direction de la circonférence du noyau de stator (32).

10. Procédé selon l'une quelconque des revendications 1 à 9, **caractérisé en ce que** le noyau de stator est composé de matériau du type fer, et dans lequel le boîtier de moteur est composé d'un métal ayant un coefficient de dilatation thermique différent de celui du matériau du type fer.

11. Procédé selon la revendication 10, **caractérisé en ce que** le boîtier de moteur est composé en forgeant de l'aluminium.
